# EUROPEAN PATENT APPLICATION

(11) **EP 4 346 195 A1**
(43) Date of publication of application: **03.04.2024**
(21) Application number: 22199298.5
(22) Date of filing: 30.09.2022
(51) Int. Cl.: H04M 3/42

(54) **METHOD AND DEVICES RELATED TO AN OUTGOING PHONE CALL**

(71) Applicant: Deutsche Telekom AG, 53113 Bonn (DE)
(72) Inventor: KRÄMLING, Andreas, 53227 Bonn (DE); SCHROEDER, David, 53179 Bonn (DE); WILKE, Lukas, 53639 Königswinter (DE)
(74) Representative: Blumbach · Zinngrebe Patentanwälte PartG mbB

(57) **Abstract**

In order to show a way how to improve the user experience for a user of a telecommunication end device (100, 110, 600) the invention proposes a method, wherein a plurality of rules is stored, each rule being respectively associated with at least one call identifier, and wherein said plurality of rules is accessible by a server (300, 700). In response to detecting a predetermined event by a telecommunications end device (100, 110, 600), which is related to an outgoing phone call, a request is transmitted from the telecommunications end device (100, 110, 600) to the server (300, 700) via a data connection, said request comprising information on the detected event and information on an associated call destination identifier. The server (300, 700) determines whether the stored rules comprise a rule, which matches the received information, and if a matching rule is determined, at least one action to be performed by the telecommunications end device (100, 110, 600) is determined, information on that is transmitted from the server (300, 700) to the telecommunications end device (100, 110, 600), and the telecommunications end device (100, 110, 600) performs the respective action.

The invention further proposes a telecommunications end device (100, 110, 600), a server (300, 700), a system (10), and computer program products, which are adapted to perform the method.

## Description

The invention generally relates to telecommunications, and in particular, to a method and devices related to an outgoing phone call, wherein a telecommunications end device is the calling entity of the outgoing phone call and the called entity of the outgoing phone call is identified by a call destination identifier.

A smartphone essentially is a portable computer device that combines mobile telephone and computing functions into one unit. Due to increasing hardware capabilities smartphones provide extensive capabilities, including software, Internet and multimedia functionality in addition to core phone functions such as voice calls and text messaging. The functionality of a smartphone is further extended by various types of integrated sensors and communication interfaces. A smartphone typically can also provide video telephony functions to the user, wherein video telephony generally refers to the two-way or multipoint reception and transmission of audio and video signals for real time communication. For providing telephony and video telephony functionality, typically respective dedicated software applications are installed on a smartphone.

Telephony applications may generally be used on any kind of computer, such as for example a personal, notebook or tablet computer, which is provided with an appropriate interface for communicating via a communication network. When using an IP-based communication network, such as the Internet, typically IP telephony is employed, also referred to as VoIP (Voice over Internet Protocol). Web-based VoIP also enables communication with web users, wherein the utilization of the WebRTC (Web Real-Time Communication) protocol provides web browsers and mobile applications with real-time communication via APIs (application programming interfaces), allowing audio and video communication to work inside web pages.

A smartphone typically is able to provide telephony and video telephony functionality via a cellular network, for instance based on GSM, UMTS or LTE, and alternatively also via an IP-based communication network, such as the Internet, access to which may for instance be provided via a router or hotspot by utilizing a WLAN (Wireless Local Area Network) or Wi-Fi interface of the smartphone.

Although telecommunications end devices today are provided with an extended functionality, the general concept of making a phone call has not changed much in recent years, i.e. a phone number is called and a voice connection is established between the calling device and the called device, wherein the phone number typically is typed in by the user of the end device or it is retrieved from a phone book stored in the end device.

However, a call to a large company often is processed by a call center, which is a centralized office used for the purpose of receiving a large amount of customer calls. Often, call centers utilize interactive voice response (IVR) systems for providing information or for routing a call. IVR is a technology that allows humans to interact with a computer-operated phone system through the use of voice and DTMF tones input via a keypad. In telecommunications, IVR allows customers to interact with a company's host system via a telephone keypad or by speech recognition, after which services can be inquired about through the IVR dialogue. IVR systems can respond with pre-recorded or dynamically generated audio to further direct users on how to proceed.

Visual Interactive Voice Response (Visual IVR) is conceptually similar to IVR. Visual IVR uses web applications to create an app-like experience for users on smartphones during call center interactions without the need to download an app. Typically, in response to a user request, e.g. the user pressing a key on the keypad, a text message, e.g. a short message using SMS, is sent to the user's phone with a link to open a visual IVR web page. After the user has agreed to use Visual IVR and in response has received the text message, the user switches to the text messaging inbox and clicks on the received link to open the visual IVR web page or some other kind of user interface. The use of a Visual IVR is for instance described in US 2011/0009096 A1.

It is an object of the invention to show a way how to improve the user experience for a user of a telecommunication end device and how to improve and/or extend the functionality of a telecommunications end device, in particular related to outgoing phone calls made with such telecommunications end device. In particular, it is an object of the invention to provide a method and devices, which can be utilized for this purpose.

The inventive solution is provided by the features of the independent claims.

Accordingly, the object of the invention is achieved by a method according to claim 1, a telecommunications end device according to claim 11, a server according to claim 12, a system according to claim 14 and computer program products according to claims 15 and 16. Preferred and/or advantageous embodiments are provided in the dependent claims.

Generally, any aspect or advantage described in the following with respect to the subject matter of an independent claim also relates to the subject matter of any other independent claim. In particular, any aspect or advantage described in the following in the context of a method generally also applies in the context of a device or system and vice versa.

A method is proposed, which comprises the step of storing a plurality of rules in such a way that a server can access the stored plurality of rules, wherein each rule of said plurality of rules is respectively associated with at least one call identifier. Said plurality of rules may for instance be stored in a database located within the server or in a separate database that can be accessed by the server. The method further comprises detecting, by a telecommunications end device, in particular by an application executed by the telecommunications end device, a predetermined event which is related to an outgoing phone call, wherein the telecommunications end device is the calling entity of the outgoing phone call, and wherein the called entity of the outgoing phone call is identified by a call destination identifier, and, in response to detecting the event, transmitting a request from the telecommunications end device to the server via a data connection, said request comprising information on the detected event and information on the call destination identifier. In response to the received request the server determines, whether the stored rules comprise a rule, which matches the received information. If a matching rule is determined, at least one action to be performed by the telecommunications end device is determined depending on the determined matching rule, information on the determined at least one action is transmitted from the server to the telecommunications end device, and the determined at least one action is performed by the telecommunications end device in response to the received information.

Form the caller's view a typical telephone call today is established in that the caller dials a number via the keypad, or via a contact list or a list of last calls, a call is setup by an operator and a dial tone or busy signal is heard. If the call is answered, a communication connection is established between the calling device and the called device, wherein the call may be answered by an answering machine or by an IVR.

A core aspect of the invention is to provide added functionality related to an outgoing phone call, wherein the method with advantage may set in before the actual establishment of the call connection by detecting a predetermined event, which is related to an outgoing phone call, said event for instance being a user input made for the purpose of initiating a phone call.

It is to be noted that a phone call refers to any kind of communication connection enabling voice communication between a calling party and a called party. Thus, the term phone call shall not be limited to a connection over a telephone network, but shall for instance also encompass communication connections based on IP telephony or video telephony, wherein the connection may be established via any suitable network, comprising but not limited to telephone networks, cellular networks, for instance based on GSM, UMTS or LTE, or IP-based communication networks, such as the Internet. Hence, the called entity of the outgoing phone call is identified by a call destination identifier which may be a phone number, but which may also be an email address or a web link, i.e. an IP address. Accordingly, also the rules may comprise a call identifier representing a phone number, an email address or a web link, i.e. an IP address.

The server may be a single server, but may also be provided as a server network, which may also be a distributed server network. Also multiple servers may be employed, which manage different sets of rules, e.g. depending on the range of the destination information, such as a number range assigned to certain companies or on the telecommunication provider associated with the respective number. In that case, in the telecommunications end device an information may be stored based on which it may be decided to which server the request is to be transmitted depending on the call destination identifier. Alternatively, the telecommunications end device may transmit the request to a pre-defined server, wherein the pre-defined server is adapted to forward the request to a further server, wherein the further server, to which the request is forwarded, is determined by the server depending on the call destination identifier comprised in the request received from the telecommunications end device. In case the request from the telecommunications end device is forwarded to a further server, the further server can access the stored plurality of rules, and accordingly, the further server determines, in response to the received request, whether the stored rules comprise a rule, which matches the received information, and if a matching rule is determined, the further server performs the subsequent steps, i.e. determining at least one action to be performed by the telecommunications end device depending on the determined matching rule, and transmitting information on the determined at least one action to the telecommunications end device, so that the determined at least one action may be performed by the telecommunications end device in response to the received information. It is to be noted that the information on the determined at least one action may be transmitted from the further server to the telecommunications end device directly or via the server, which initially received the request from the telecommunications end device.

The plurality of rules may be pre-defined or may be programmable, for instance by allowing a third party server access to the respective server and/or to the database. Such third party server may be run by a company that wants to provide added functionality for users of telecommunications end devices, who may call the company and/or who are customers of the company. In that case, the company may configure rules which comprise a phone number of the company as call identifier.

A matching rule may be identified based on one or more parameters, such as the call destination identifier transmitted to the server at least partly matching the call identifier of the respective rule. Further parameters may comprise time of day, day of the week, status of the called party that corresponds to the call identifier of the rule, or information on whether the calling party has made a call to the called party already in the past.

Furthermore, identifying a matching rule may also be based on a priority, which is associated with each rule or an order of the rules, so that for instance the first matching rule found in a list of rules may be identified as matching rule. Thus, in the simplest case, the plurality of rules is a list of rules, wherein each rule comprises a call identifier and possibly further parameters for deciding on rule matching, and also information on at least one action to be performed by the telecommunications end device.

The data connection between the telecommunications end device, via which the request is transmitted from the telecommunications end device to the server, may already be established or may be established in response to detecting the event.

The detected event may for example be a phone number being entered by the user of the telecommunications end device, wherein it may already be detected as an event that a part of a phone number is entered by a user. Essentially, any kind of user command being entered at the telecommunications end device may be detected as an event, in particular a user command to request the outgoing phone call. The detected event may also be a user command being entered at the telecommunications end device while the telephone connection of the outgoing phone call is established, or the detected event may also be that the telephone connection of the outgoing phone call is terminated by the calling entity or by the called entity.

In a preferred embodiment, the server, in response to receiving the request from the telecommunications end device, retrieves data from the telecommunications end device and/or from a third party server, wherein the server determines the matching rule depending on the retrieved data. Data retrieved from the telecommunications end device may preferably be stored in the telecommunications end device in the form of a cookie. Data may preferably be stored in the telecommunications end device in encrypted form, so that access to the data by the user of the telecommunications end device is prevented, but when retrieved by the server, the server is capable to decrypt the data. The server may also with advantage retrieve data from a third party server and transmit the retrieved data to the telecommunications end device. In a preferred embodiment, data retrieved from the telecommunications end device comprises sensor data acquired by a sensor of the telecommunications end device, in particular location-related data such as GPS data, motion-related data such as speed data, or data on user activity or user health such as data on the user's heart rate. The sensor data retrieved by the server with advantage may also be shared with a third party server and/or the recipient of the outgoing call.

For the case that a communication between the telecommunications end device and the server should not be possible, for instance due to a disturbed or interrupted data connection, preferably a pre-defined processing of the detected event is performed, preferably by performing the normal operation of the telecommunications end device. In a preferred embodiment, a pre-defined processing of the detected event is performed, if the telecommunications end device has not received information from the server within a predetermined time interval after the telecommunications end device has sent the request to the server. Preferably, a pre-defined processing of the detected event is also performed, if the telecommunications end device is unable to transmit the request to the server.

The information on the determined action that is transmitted from the server to the telecommunications end device in particular comprises media data to be output by the telecommunications end device and/or instructions executable by a processor of the telecommunications end device. Media data may for instance be image data, text, video data and/or audio data. Executable instructions may comprise software applications directly executable by a processor of the telecommunications end device or a script, e.g. using JavaScript, which is executable by a web browser installed on the telecommunications end device. Information on the determined action that is transmitted from the server to the telecommunications end device may also be provided in a markup language, such as XML, or it may be provided in the form of pre-defined commands executable by a pre-defined application that is installed in the telecommunications end device.

The information on the determined action that is transmitted from the server to the telecommunications end device may also comprise information on events to be detected in the future, such as a list of events relevant for next steps. Since information may for instance also be retrieved from a third party server, it may take some time to fetch information that is to be transmitted from the server to the telecommunications end device. Hence, additional information may be sent to the telecommunications end device delayed, i.e. when the telecommunications end device has already started to perform an action.

Preferably, the determined action performed by the telecommunications end device comprises at least one of establishing the outgoing phone call, outputting media data stored in the telecommunication end device and/or media data received from the server, accessing a webpage via a web address provided by the server, executing instructions received from the server by a processor of the telecommunications end device. For instance, web content, which has been received from the server or may be already stored in the telecommunications end device, may be displayed to the user of the telecommunications end device, e.g. in the form of a webview. The displayed web content may for example also comprise virtual buttons, wherein pressing the button may either be detected as an event, resulting in a further request being sent to the server, or pressing the button may result in a pre-defined action being performed by the telecommunications end device. In other words, sending a request to the server may be triggered multiple times, whenever the user performs an action that results in a pre-defined event being detected. Alternatively, the information sent back to the telecommunications end device from the server may comprise information on follow-up steps as well, i.e. the information comprises information on multiple actions respectively to be performed, when certain events are detected or when the user performs an action, such as pressing a button.

Further, the determined action performed by the telecommunications end device may also comprise an interaction with an application stored on the telecommunications end device, such as for instance initiating a video telephony call or adding a calendar entry. A further action may be to download documents to the telecommunications end device, such as terms and conditions, tickets or confirmations.

In a preferred embodiment, the server identifies the entity from which the request is received and authenticates the entity's identity to a third party server, wherein the request in particular comprises an IP address, a certificate, an integrated circuit card identifier, a biometric identifier such as a digital fingerprint representation or a speech sample, and/or a cryptographic key. Such identity authentication may with advantage be utilized for performing a PostIdent or VideoIdent method.

In a further preferred embodiment, a request is transmitted from the telecommunications end device to the server, only if the call destination identifier is in a set of pre-selected call destination identifiers. The set of pre-selected call destination identifiers may for example comprise user-selected entries of a phone book or a contact list stored in the telecommunications end device. That way, the user may select, for which of his or her contacts the described method shall be employed.

A call destination identifier may be automatically deleted from the set of pre-selected call destination identifiers, at least for a pre-defined time period, if a request comprising the respective call destination identifier returned no information or the information that no matching rule could be found. It is also conceivable that, if a call destination identifier has not been used for a pre-defined time period, i.e. no outgoing phone call has been made associated with the respective call destination identifier, a request is transmitted from the telecommunications end device to the server, although the call destination identifier is not in the set of pre-selected call destination identifiers, and the call destination identifier may then be automatically added to the set of pre-selected call destination identifiers, if the request comprising the respective call destination identifier returned information on at least one action to be performed by the telecommunications end device, due to a matching rule being found. That way, the members of the set of pre-selected call destination identifiers may be managed automatically.

Further, with advantage a rule caching may be employed. In other words, the information on at least one action to be performed by the telecommunications end device, which has been received from the server in response to a request may be stored, i.e. cached, in the telecommunication device in such a way that the stored or cached information is associated with the content of the request, i.e. the information on the detected event and the information on the call destination identifier. If, at a later point in time, a request is to be transmitted to the server having the same content, instead of transmitting the request, the cached information may be accessed. For caching purposes, the information received from the server in response to a request may advantageously comprise information on a validity period, during which the cached information may be accessed and after which again a request shall be transmitted. The validity period may preferably be provided in the form of a caching duration, after which the cached information is deleted again, wherein the caching duration may be defined as a time period, e.g. 3600 seconds, or by defining the end of the caching duration by providing a respective point in time, e.g. December 31, 2022, 0:00 UTC. Actually, what is cached is not the rule itself, but the result of the rule being applied to the content of a request. The utilization of a limited caching duration is advantageous, since the rules may change over time and the rules also may comprise time-dependent parameters.

A telecommunications end device, which in particular is adapted for performing the above-described method, comprises a first communication interface for establishing a phone call, a second communication interface for establishing a data connection to a server, a user interface, a memory, and a processor for executing instructions stored in the memory. The telecommunications end device is adapted to detect an event which is related to an outgoing phone call, wherein the telecommunications end device is the calling entity of the outgoing phone call, and wherein the called entity of the outgoing phone call is identified by a call destination identifier, in response to detecting an event, automatically establish a data connection to the server and transmit a request to the server, said request comprising information on the detected event and information on the call destination identifier, and to receive information on an action from the server and perform the action in response to the received information.

A server, which in particular is adapted for performing the above-described method, comprises a communication interface for establishing a data connection with a plurality of telecommunications end devices, a memory, and a processor for executing instructions stored in the memory. The server is adapted to access a plurality of rules, which are stored in the memory or in a storage device, in particular in a database, which is accessible by the server, wherein each rule of said plurality of rules is respectively associated with at least one call identifier, receive a request from a telecommunications end device, wherein the request comprises information on an event detected by the telecommunications end device, wherein the event is related to an outgoing phone call, wherein the telecommunications end device is the calling entity of the outgoing phone call, and wherein the called entity of the outgoing phone call is identified by a call destination identifier, and wherein the request comprises information on the call destination identifier, and determine, in response to receiving the request, whether the plurality of rules comprises a rule which matches the received information, and, if a rule is determined, which matches the received information, determine an action to be performed by the telecommunications end device depending on the determined matching rule, and transmit information on the determined action to the telecommunications end device.

The server may advantageously be adapted to forward a request, which has been received from a telecommunications end device, to a further server, and preferably also to forward replies received from the further server to the requesting telecommunications end device, wherein the further server has a similar functionality as the server, and wherein the further server in particular also is adapted for performing the above-described method. In particular, the server may also be adapted to receive a request from a telecommunications end device via another server.

A system, which in particular is adapted for performing the above-described method, comprises a server as described above, at least one telecommunications end device as described above, and at least one communication network.

The above problem is also solved by a computer program product, which comprises instructions which, when executed by a telecommunications end device, cause the telecommunications end device to carry out the following steps:
- detect an event which is related to an outgoing phone call, wherein the telecommunications end device is the calling entity of the outgoing phone call, and wherein the called entity of the outgoing phone call is identified by a call destination identifier,
- in response to detecting an event, transmit a request to the server via a data connection, said request comprising information on the detected event and information on the call destination identifier, and
- receive information on an action from the server and perform the action in response to the received information.

The above problem is also solved by a computer program product, which comprises instructions which, when executed by a server, cause the server to carry out the following steps:
- determine, in response to receiving a request from a telecommunications end device, the request comprising information on an event detected by the telecommunications end device, wherein the event is related to an outgoing phone call, wherein the telecommunications end device is the calling entity of the outgoing phone call, and wherein the called entity of the outgoing phone call is identified by a call destination identifier, and wherein the request comprises information on the call destination identifier, whether a plurality of rules, which is accessible by the server, comprises a rule which matches the received information, wherein each rule of said plurality of rules is respectively associated with at least one call identifier,
   and
- if a rule is determined, which matches the received information, determine an action to be performed by the telecommunications end device depending on the determined matching rule, and transmit information on the determined action to the telecommunications end device.

### Brief Description of the Figures

It is shown in
Fig. 1 a schematic view of an exemplary and simplified communication system, adapted to perform the inventive method,
Fig. 2 schematically a user's view of a first exemplary embodiment of an inventive method, wherein a business card of the called party is shown to a caller,
Fig. 3 schematically a user's view of a second exemplary embodiment of an inventive method, wherein the functions of a service desk are provided to a caller,
Fig. 4 schematically a user's view of a third exemplary embodiment of an inventive method, related to call forwarding,
Fig. 5 schematically a user's view of a fourth exemplary embodiment of an inventive method, providing a self-service option to a caller,
Fig. 6 schematically a user's view of a fifth exemplary embodiment of an inventive method, providing call center functionality,
Fig. 7 a schematic flowchart of the steps of an exemplary embodiment of an inventive method generally showing preferred method options,
Fig. 8 a schematic flowchart of the steps of the exemplary embodiment of an inventive method shown in Fig. 5.

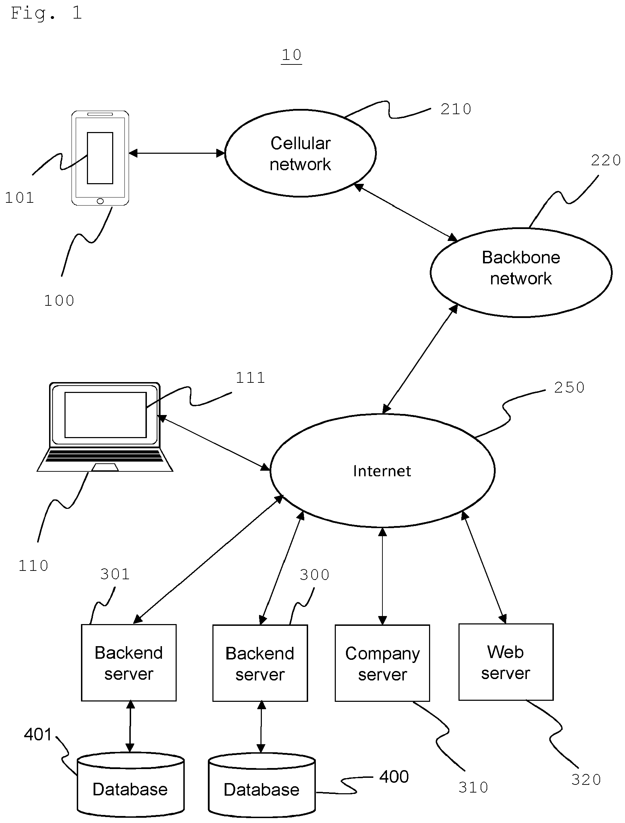

Fig. 1 shows an exemplary communication system 10, in which the inventive method may be performed. Two exemplary telecommunications end devices 100 and 110 are shown, provided as a smartphone 100 and a notebook 110. In the shown example, the smartphone 100 is adapted for communication with the backbone network 220 of a telecommunications provider via a cellular network 210. Thereby, the smartphone 100 has access to the Internet 250. Although not shown in Fig. 1, the smartphone 100 may also be adapted to communicate via a WLAN network with the Internet 250. The notebook 110 also has access to the Internet 250 by means of an appropriate interface.

Accordingly, the smartphone 100 has a communication interface for establishing a phone call and also a communication interface for establishing a data connection to a server, in particular via the Internet 250. In Fig. 1 four servers are shown, two backend severs 300 and 301, a company server 310 and a web server 320. In the shown example, the backend server 300 has access to a database 400 and the backend server 301 has access to a database 401.

In the shown example, in database 400 a plurality of rules is stored, wherein each rule of said plurality of rules is respectively associated with at least one call identifier, and wherein said plurality of rules is accessible by the backend server 300. Similarly, in database 401 a plurality of rules is stored, which are accessible by backend server 301, wherein the rules stored in database 401 typically are different from those stored in database 400. Different backend servers may be provided for instance for different geographical regions or for different telecommunications providers. With advantage a plurality of backend servers may be provided, wherein for exemplary purposes in Fig. 1 only two backend servers 300 and 301 are shown.

The telecommunications end devices 100 and 110, respectively, at least comprise a user interface, a memory and a processor for executing instructions stored in the memory. The user interface of smartphone 100 typically comprises a touch-sensitive display, and the notebook 110 typically is provided with a display and a keypad for user interaction.

In the shown example, smartphone 100 is provided with a dialer application, dialer app for short, schematically indicated by reference numeral 101, which is specially adapted for performing the inventive method. The smartphone 100, and in particular the dialer app 101, is adapted to detect an event, which is related to an outgoing phone call, which the user may initiate on smartphone 100, for example by providing a destination call identifier in the form of a phone number and pressing the call button, wherein the phone number may for example be provided by directly typing it in, by selecting it from a list of contacts or a list of missed calls stored in the smartphone 100 or by selecting a redialing function of the smartphone 100.

The events, which the smartphone 100 and in particular the dialer app 101 is adapted to detect are preferably pre-defined, for example information on events to be detected may be stored in the smartphone 100. In the simplest case, an event that can be detected is a user input provided for initiating an outgoing phone call, as laid out above. Since the event is related to an outgoing phone call, the event is associated with a destination call identifier.

The dialer app 101 is adapted to respond to a detected event by transmitting a request to a server via a data connection, said request comprising information on the detected event and information on the associated call destination identifier. In the shown example, the dialer app 101 is adapted to transmit the request to the backend server 300. If a plurality of backend servers are provided, in the smartphone 100 an information may be stored based on which it may be decided to which server the request is to be transmitted depending on the call destination identifier. Alternatively, the smartphone 100 may transmit the request to a pre-defined server, for example to backend server 300, wherein the backend server 300 is adapted to forward the request to a further server, for example to backend server 301, wherein the backend server 301, to which the request is forwarded, is determined by the backend server 300 depending on the call destination identifier comprised in the request received from the smartphone 100. The backend server 301 can access a plurality of rules stored in database 401, and accordingly, the backend server 301 determines, in response to the received request, whether the stored rules comprise a rule, which matches the received information, and if a matching rule is determined, the backend server 301 determines at least one action to be performed by the smartphone 100 depending on the determined matching rule, and transmits information on the determined at least one action to the smartphone 100, so that the determined at least one action may be performed by the smartphone 100 in response to the received information. It is to be noted that the information on the determined at least one action may be transmitted from the backend server 301 to the smartphone 100 directly or via the backend server 300, which initially received the request from the smartphone 100.

In response to receiving a request from the smartphone 100 the backend server 300 determines whether the stored rules comprise a rule, which matches the received information, and if a matching rule is identified, at least one action to be performed by the smartphone 100 is determined depending on the identified matching rule. In response to receiving the request from the smartphone 100, the backend server 300 may retrieve data from the smartphone 100 and/or from a third party server, such as company server 310, wherein the backend server 300 determines the matching rule depending on the retrieved data, and wherein data retrieved from the smartphone 100 may preferably be stored in the smartphone 100 in the form of a cookie or may comprises data provided by a sensor of the smartphone 100. Besides the received information, i.e. event information, call destination identifier, and optionally information stored on the telecommunications end device or sensor data, also further information might be considered, such as a timestamp or an IP address from the calling device usable to get a geo location. It is to be noted that in order to reduce latency possible next steps, depending on possible future events, might be returned as well and cached by the dialer app 101, so that potentially no follow-up interaction with the backend server 300 might be required.

The backend server 300 then transmits information on the determined at least one action to the requesting telecommunications end device, i.e. to the smartphone 100, which performs the determined at least one action in response to the received information. In the described example, the dialer app 101 is adapted to receive the information on at least one action to be performed by the smartphone 100 from the backend server 300 and to cause the smartphone 100 to perform the at least one action.

Events to be detected may for example comprise a user command being entered at the smartphone 100 to request the outgoing phone call, a phone number being entered at least in part by a user, a user command being entered at the telecommunications end device while the telephone connection of the outgoing phone call is established, or the telephone connection of the outgoing phone call being terminated by the calling entity or by the called entity. It is to be noted that the events, which the smartphone 100 is adapted to detect, may also be altered or supplemented by information received from the backend server 300.

The notebook 110 may be provided with a video telephony application 111, which is specially adapted for performing the inventive method. Accordingly, the video telephony application 111 is adapted to detect an event, which is related to an outgoing video telephony call, which the user may initiate on the notebook 110, for example by providing a destination call identifier in the form of an email address and pressing the video call button or by clicking on a web link to access a video conference, wherein the latter case the web link represents the respective destination call identifier.

A core aspect of the inventive method is to provide additional information to a calling party, in particular when an outgoing call is initiated by the user of a telecommunications end device by performing a look-up via a data connection to a backend server, wherein the look-up is based on the call destination identifier, i.e. the called phone number or the email address of a called party of a video telephony call.

In particular, the provided additional information comprises at least one action to be performed by the telecommunications end device. For providing the information to the requesting telecommunications end device the backend server 300 may retrieve data from a company server 310. Further, telecommunications end device may be provided by the backend server 300 with a web link, which the telecommunications end device may use to retrieve data from a web server 320.

A rule of the plurality of rules in the database 400 may be stored in the database 400 by a telecommunications provider on behalf of an access owner, i.e. the owner of the communication access and/or of the communication device that can be reached by means of the call destination identifier, wherein the call identifier comprised in the rule matches the call destination identifier, i.e. is identical to the call destination identifier at least in part. The access owner may also be allowed to directly store rules in the database 400. If for example the company, which operates the company server 310, is the access owner, the backend server 300 may be adapted to allow company server 310 access to the database 400.

It is noted that the above describes functionality of the dialer app 101 or of the video telephony application 111 may also be part of a different application installed on the respective end device, or may be embedded directly into the operating system (OS) of the respective end device. It is also conceivable to provide a software development kit (SDK) for the functionality to be integrated into a third party application.

It is also important to note that an outgoing phone call, which is requested by a user of the telecommunications end device, i.e. for example by a user of the smartphone 100 or by a user of the notebook 110, is not necessarily established. Instead, the information, which the telecommunications end device receives from the backend server 300 may cause the telecommunications end device to perform a different action. Generally, an action to be performed by the telecommunications end device may be performed before the outgoing call is established, in parallel to the outgoing call being established, and also after the outgoing call has already been terminated. A further event, which again leads to a request being transmitted to the backend server 300 may be detected after the at least one action has been performed by the telecommunications end device, but may also be detected while the at least one action still is being performed by the telecommunications end device.

A main idea of the invention is to provide a more interactive and enhanced experience of the call management by providing additional information and react on user events. It is to be noted that parts of the user experience might be provided by additional partners, allowing for instance the scheduling or management of doctor appointments, access to social media content, integration of visual IVR or accessing partner CRM systems. For this purpose the backend server 300 may be adapted to communicate with respective partner servers, such as for example company server 310, and information transmitted to the telecommunications end device from the backend server 300 may comprise a link to a web page, wherein an action to be performed may be to automatically access this web page.

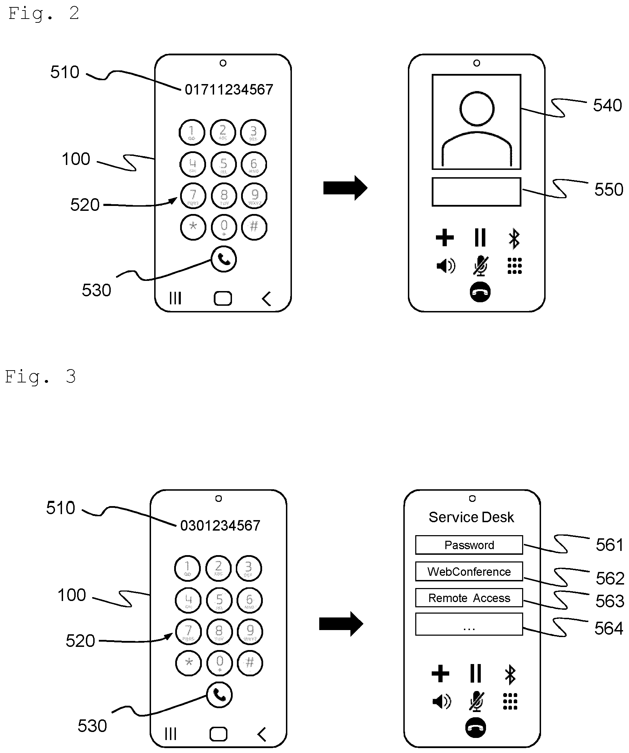

Hence, the described method with advantage allows to extend the user experience of a user of a telecommunications end device in various ways. In Figures 2 to 6, several exemplary use cases are described from the perspective of the user of the telecommunications end device. For simplicity the examples are described with reference to smartphone 100, they however may be performed analogously with any other telecommunications end device, which is adapted for performing the inventive method.

In the example shown in Fig. 2, the user of the smartphone 100 opens the dialer app 101 provides a phone number 510 using keypad 520 and presses the button 530 in order to initiate an outgoing phone call, wherein the phone number 510 is the call destination identifier. When this is detected by the dialer app 101, a request is transmitted from the smartphone 100 to the backend server 300, said request comprising information on the event, i.e. the information that the initiation of an outgoing phone call is requested by the user, and the call destination identifier in the form of phone number 510. The backend server 300 identifies a matching rule that comprises a call identifier, which matches the received call destination identifier. It is to be noted that the call identifier in the rule may comprise wildcards, having for example the form "030 181^{∗}", wherein a call destination identifier matches that comprises any number or numbers in the place of the ^{∗}. In the shown example, the matching rule defines the content of a business card to be shown on the smartphone 100 and the requested call to be established. The respective information is transmitted to the smartphone 100, said information comprising an image 540 and a text block 550 to be shown on the display of the smartphone 100, and the information to establish the outgoing call. Hence, the action that is performed by the smartphone 100 in response to the received information is displaying a business card of the called party, comprising image 540 and text block 550, and at the same time establishing the outgoing call. That way, the caller advantageously already gets additional information on the called party while it is ringing.

In the example shown in Fig. 3, the user of the smartphone 100 opens the dialer app 101 provides a phone number 510 using keypad 520 and presses the button 530 in order to initiate an outgoing phone call, wherein the phone number 510 is the call destination identifier. When this is detected by the dialer app 101, a request is transmitted from the smartphone 100 to the backend server 300, said request comprising information on the event, i.e. the information that the initiation of an outgoing phone call is requested by the user, and the call destination identifier in the form of phone number 510. The backend server 300 identifies a matching rule that comprises a call identifier, which matches the received call destination identifier. In the shown example, the matching rule defines that the options of a service desk shall be shown on the smartphone 100 with further information on actions to be performed, when a respective one of the options is activated by the user of the smartphone 100. The respective information is transmitted to the smartphone 100, said information for example comprising a web view to be displayed on the smartphone 100 having buttons 561, 562, 563 and 564 that can be pressed by the user of the smartphone 100. The information further comprises the information that pressing on of the buttons 561, 562, 563 or 564 shall be detected as an event, resulting in another request being transmitted to the backend server 300. In order to improve latency the received information may alternatively already comprise instructions to be executed, when a respective one of the buttons is pressed, so that no further request needs to be transmitted to the backend server 300. It is to be noted that in the example shown in Fig. 3, no actual phone call is established. In other words, the outgoing phone call that is requested by the user of the smartphone 100 by pressing the call button is not initiated, but instead the service desk is provided to the user of the smartphone 100.

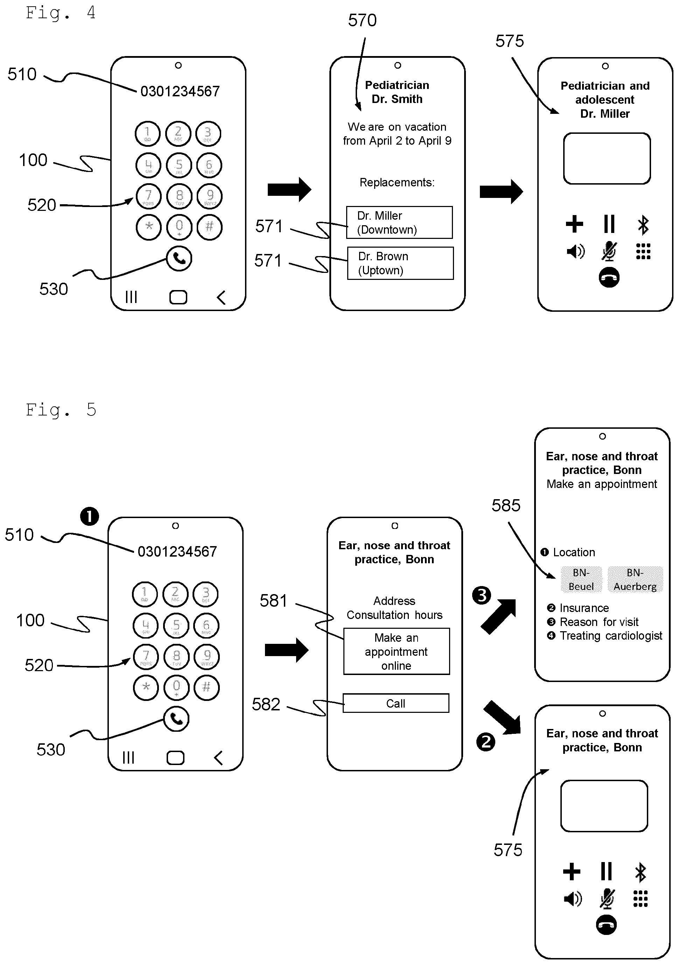

In the example shown in Fig. 4, the user of the smartphone 100 again opens the dialer app 101, provides a phone number 510 using keypad 520 and presses the button 530 in order to initiate an outgoing phone call, wherein the phone number 510 is the call destination identifier. When this is detected by the dialer app 101, a request is transmitted from the smartphone 100 to the backend server 300, said request comprising information on the event, i.e. the information that the initiation of an outgoing phone call is requested by the user, and the call destination identifier in the form of phone number 510. The backend server 300 identifies a matching rule that comprises a call identifier, which matches the received call destination identifier. In the shown example, the matching rule is identified also depending on the present date, wherein the matching rule is specifically provided for the vacation time of a doctor. The matching rule defines a respective information 570 to be displayed on the smartphone 100 and two buttons to be displayed on the smartphone 100 for redirecting the call to a replacement doctor. The respective information is transmitted to the smartphone 100, comprising content 570 to be shown on the display of the smartphone 100, and buttons 571 and 572 to be shown on smartphone 100 that can be pressed by the user of the smartphone 100. By pressing one of the buttons, a call is initiated to the phone number of the respective replacement doctor. Similar to the example shown in Fig. 3, the buttons may be part of a web view and pressing a button may be detected as an event resulting in a further request transmitted to the backend server 300 or the instructions defining the actions to be performed when a button is pressed is provided beforehand and cached in the smartphone 100. When one of the buttons 571 or 572 is pressed, a call to the replacement doctor is established in a similar way as described above with respect to Fig. 2, displaying information 575 similar to a business card while the call is being established.

In the example shown in Fig. 5 again initiates an outgoing phone call to a doctor's practice, wherein in this example an option is provided to the user of the smartphone 100 to make an appointment online. For that purpose, two buttons 581 and 582 are displayed on the smartphone 100, which can be pressed by the user. When button 581 is pressed, a form 585 is shown on smartphone 100 for the user to fill in in order to make an appointment online. Alternatively, by pressing the button 582 an actual phone call may be initiated, wherein in this case again information about the called party is displayed on the smartphone 100. Again, pressing the buttons 581 and 582 may result in a further request to be transmitted to the backend server 300, or alternatively information on respective actions to be performed may be provided beforehand, thus providing information on several, also optional actions to be performed by the smartphone 100.

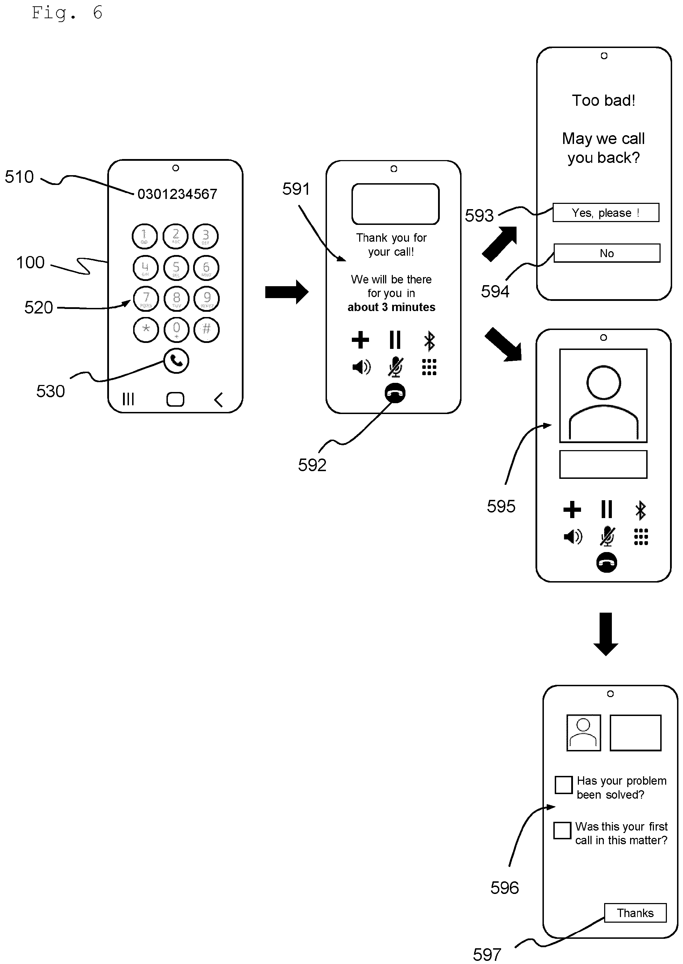

In the example shown in Fig. 6, the user of the smartphone 100 opens the dialer app 101 provides a phone number 510 using keypad 520 and presses the button 530 in order to initiate an outgoing phone call, wherein the phone number 510 is the call destination identifier. When this is detected by the dialer app 101, a request is transmitted from the smartphone 100 to the backend server 300, said request comprising information on the event, i.e. the information that the initiation of an outgoing phone call is requested by the user, and the call destination identifier in the form of phone number 510. The backend server 300 identifies a matching rule that comprises a call identifier, which matches the received call destination identifier. In the shown example, the number to be called is that of a call center, wherein the backend server 300 retrieves information from a server of the call center to get the information, when a line is expected to be available. This information 591 is transmitted to the smartphone 100 from the backend server 300 and displayed to the user, however, without actually establishing the call. That way the number of lines being blocked in the call center may with advantage be reduced. Further, information on events to be monitored may be transmitted to the smartphone 100, and information on the actions to be performed, when one of these actions is detected. Of course, a detected event may also result in a further request to be transmitted to the backend server 300, as already described above.

In the shown example, the backend server 300 may periodically retrieve information from a server of the call center to get the information, when a line is expected to be available and transmits respective updated information to the smartphone 100, which is displayed to the user. When the backend server 300 retrieves form the server of the call center the information that a line is available, the call to the call center is established, showing information 595 about the called party. If, however, the user presses the termination button 592, before expiration of the timer, an information is displayed on the smartphone 100 asking the user whether he or she wants to be called back, providing two respective buttons, wherein pressing one of these buttons causes a respective information to the transmitted online to the call center. It is to be noted that in this path no actual phone call has been established. If the call has been established, the termination of the call may be detected resulting in a questionnaire 596 being displayed on the smartphone 100, which can be filled in by the user of the smartphone 100, wherein the answers are transmitted to the call center, when the button 597 is pressed by the user. Alternatively, the smartphone 100 may be instructed to directly establish the call to the call center and the information 591 is retrieved from the server of the call center and transmitted to the smartphone 100, after the call connection has been established, but while the call is still on hold in the call center.

In addition to the above described use cases, various further applications are conceivable, which may comprise further extensions, such as for example identifying the calling party based on the network, e.g. based on the IP address, and/or a cryptographic certificate being installed on the telecommunications end device, which may for example be used for signing micro contracts as part of a phone call, or for signing or confirming orders, e.g. for banking purposes. Also, interaction with other installed applications on the telecommunications end device may be provided, for instance in order to automatically add calendar entries, or an exchange or automatic transfer of documents as part of the call or after the call may be provided, e.g. contractual information/T&Cs or tickets installed in a e-wallet on the telecommunications end device. Furthermore, access to sensor data or functions for disabled persons may be provided.

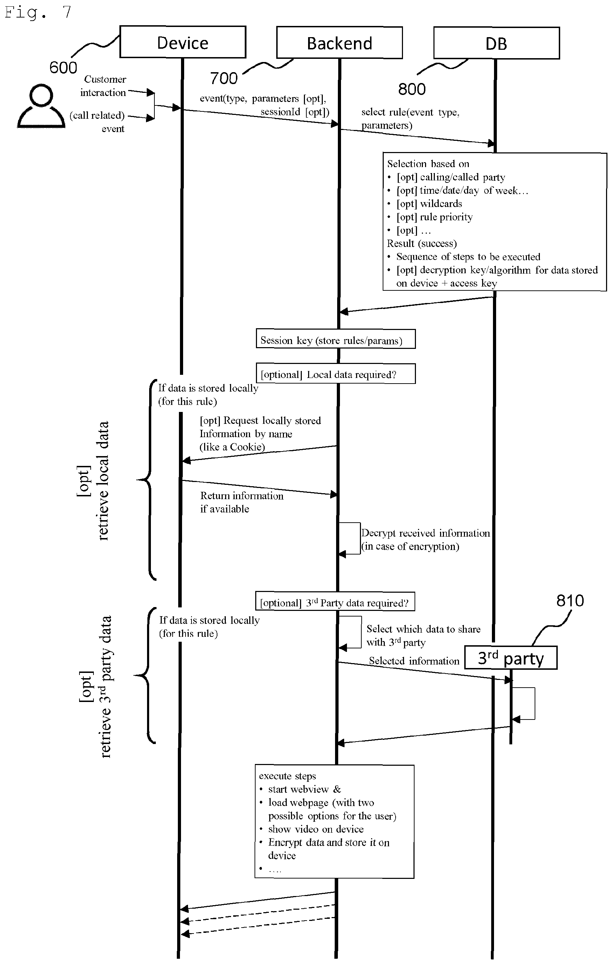

In Fig. 7, a schematic flowchart of the steps of an exemplary embodiment of an inventive method is shown in the form of a generic building block, wherein the parts of the flowchart relating to retrieving local data from the telecommunications end device and that relating to retrieving third party data are optional parts.

The device 600 shown in Fig. 7 may for example be the smartphone 100 or the notebook 110 as shown in Fig. 1, the backend 700 shown in Fig. 7 may for example be the backend server 300 as shown in Fig. 1, and the database (DB) 800 shown in Fig. 7 may for example be the database 400 as shown in Fig. 1. The third party server 810 shown in Fig. 7 may for example be the company server 310 as shown in Fig. 1.

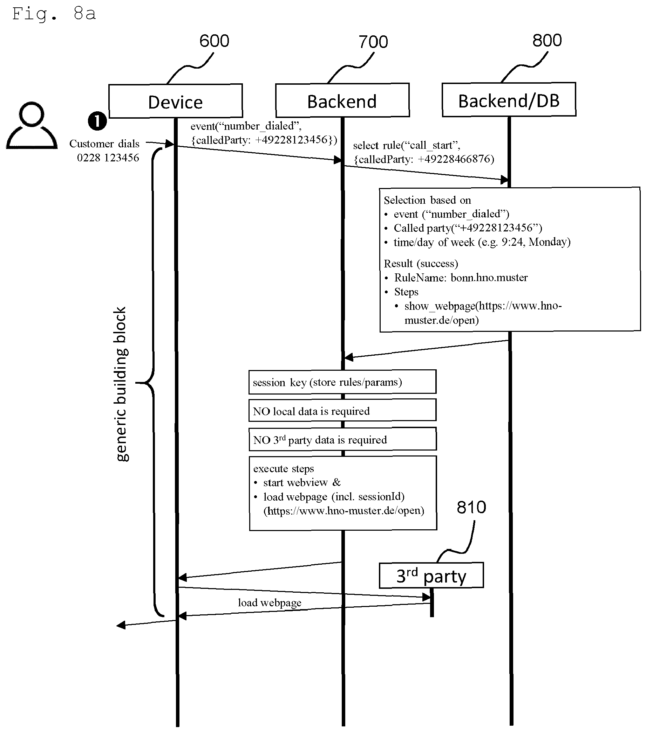

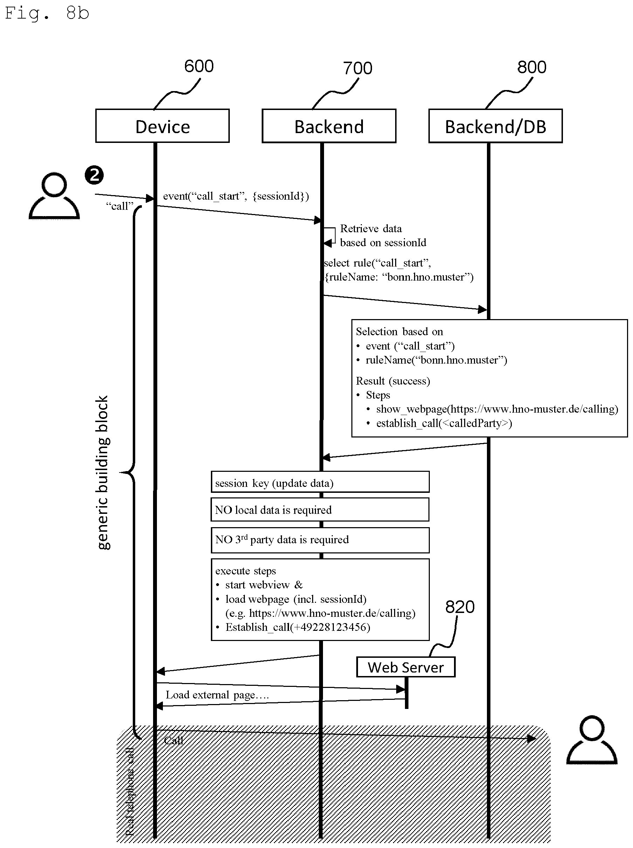

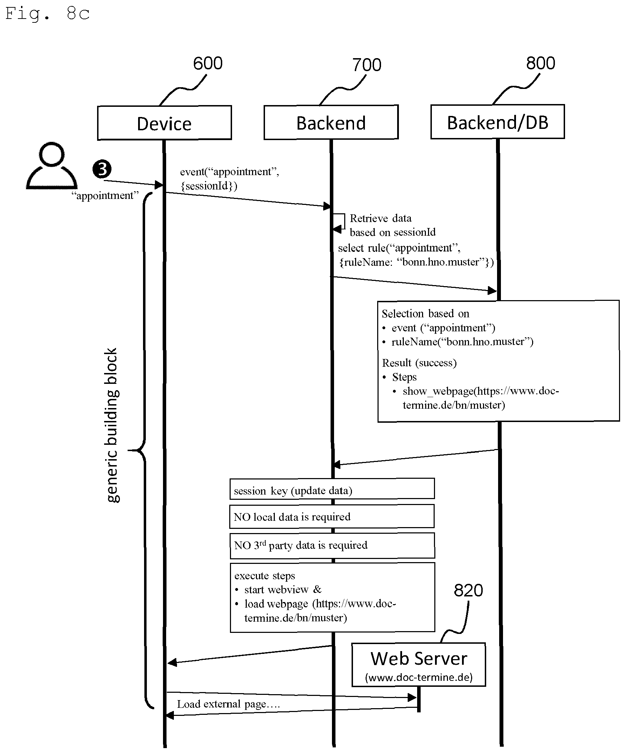

Fig. 8, comprising Figures 8a, 8b and 8c, shows a schematic flowchart of the steps of an exemplary embodiment of the inventive method, which corresponds to the example shown in Fig. 5 from the perspective of the user of the telecommunications end device. The web server 820 shown in Figures 8b and 8c may for example be the web server 320 as shown in Fig. 1. The circles with numbers 1, 2 and 3, shown in Figures 8a, 8b and 8c correspond to the respective numbers shown in Fig. 5, indicating to which step in the example shown in Fig. 5 the respective part of the flowchart of Fig. 8 corresponds.

Preferably, also a session identifier, or short session id, may be utilized as a parameter, as indicated in the shown flowcharts. A session is a mechanism to persist information across different web pages to identify users as they navigate a site or app.

The communication between the backend server and the telecommunications end device, e.g. between backend server 300 and smartphone 100, and also the communication between different backend servers, e.g. between backend servers 300 and 301, may advantageously be performed using a stateless communication protocol, such as for example the HTTP protocol. However, for the respective data connections also any other suitable communication protocol may be utilized.

Since the HTTP protocol is a stateless protocol, there is no way a server can remember a specific user between multiple requests. For example, when a web page is accessed, the server is just responsible for providing the contents of the requested page. When other pages of the same website are accessed, the web server interprets each request separately, as if they were unrelated to one another. There is no way for the server to know that each request originated from the same user. This problem is overcome by using sessions, wherein a session is a mechanism to persist information across different web pages to identify users as they navigate a site or app. Therefore, also a session identifier, or short session id, may preferably be utilized as a parameter, as indicated in the flowcharts shown in Figures 7 and 8.

Cookies and session variable may be utilized to store data. Session variables are for example a way to store data about a user in a database and retrieve it later. Cookies are for example a way to store data about a user on the user's computer. Session variables are typically used in applications that need to keep track of a user's activity. Cookies are typically used in applications that need to store information about a user for a single site.

The session id may in particular also be used as a call destination identifier in subsequent requests being transmitted after an initial request, wherein the requests are related to the same outgoing phone call. This is for example the case for the requests transmitted from the device 600 to the backend 700 as shown in Figures 8b and 8c. The phone number of the called party, comprised in the initial request transmitted from the device 600 to the backend 700 as shown in Fig. 8a, is associated with the respective session id and may be used by the backend 700 for determining a matching rule.

## Claims

1. Method, comprising the following steps
- storing a plurality of rules, wherein each rule of said plurality of rules is respectively associated with at least one call identifier, and wherein said plurality of rules is accessible by a server (300, 700),
- detecting, by a telecommunications end device (100, 110, 600) , in particular by an application (101, 111) executed by the telecommunications end device (100, 110, 600), a predetermined event which is related to an outgoing phone call, wherein the telecommunications end device (100, 110, 600) is the calling entity of the outgoing phone call, and wherein the called entity of the outgoing phone call is identified by a call destination identifier,
- in response to detecting the event,
- transmitting a request from the telecommunications end device (100, 110, 600) to the server (300, 700) via a data connection, said request comprising information on the detected event and information on the call destination identifier,
- determining, by the server (300, 700), whether the stored rules comprise a rule which matches the received information,
- if a matching rule is determined,
- determining at least one action to be performed by the telecommunications end device (100, 110, 600) depending on the determined matching rule,
- transmitting information on the determined at least one action from the server (300, 700) to the telecommunications end device (100, 110, 600), and
- performing the determined at least one action by the telecommunications end device (100, 110, 600) in response to the received information.

2. Method of claim 1, wherein the detected event is
- a user command being entered at the telecommunications end device to request the outgoing phone call, or
- a phone number (510) being entered at least in part by a user,
- a user command being entered at the telecommunications end device (100, 110, 600) while the telephone connection of the outgoing phone call is established, or
- the telephone connection of the outgoing phone call is terminated by the calling entity or by the called entity.

3. The method of one of claims 1 or 2, wherein the server (300, 700), in response to receiving the request from the telecommunications end device (100, 110, 600), retrieves data from the telecommunications end device (100, 110, 600) and/or from a third party server (310), wherein the server (300, 700) determines the matching rule depending on the retrieved data.

4. The method of claim 3, wherein data retrieved from the telecommunications end device (100, 110, 600) comprises sensor data acquired by a sensor of the telecommunications end device (100, 110, 600), in particular location-related data such as GPS data, motion-related data such as speed data, or data on user activity or user health such as heart rate data.

5. The method of any one of the preceding claims, wherein the server (300, 700) retrieves data from a third party server (310, 810) and transmits the retrieved data to the telecommunications end device.

6. The method of any one of the preceding claims, wherein a pre-defined processing of the detected event is performed if the telecommunications end device (100, 110, 600) has not received information from the server (300, 700) within a predetermined time interval after the telecommunications end device (100, 110, 600) has sent the request to the server (300, 700).

7. The method of any one of the preceding claims, wherein the information on the determined action that is transmitted from the server (300, 700) to the telecommunications end device (100, 110, 600) comprises media data to be output by the telecommunications end device (100, 110, 600) and/or instructions executable by a processor of the telecommunications end device (100, 110, 600).

8. The method of any one of the preceding claims, wherein the determined action performed by the telecommunications end device (100, 110, 600) comprises at least one of
- establishing the outgoing phone call,
- outputting media data stored in the telecommunication end device (100, 110, 600) and/or media data received from the server (300, 700),
- accessing a webpage via a web address provided by the server (300, 700),
- executing instructions received from the server (300, 700) by a processor of the telecommunications end device (100, 110, 600).

9. The method of any one of the preceding claims, wherein the server (300, 700) identifies the entity from which the request is received and authenticates the entity's identity to a third party server (310, 810), wherein the request in particular comprises an IP address, a certificate, an integrated circuit card identifier, a biometric identifier such as a digital fingerprint representation or a speech sample, and/or a cryptographic key.

10. The method of any one of the preceding claims, wherein a request is transmitted from the telecommunications end device (100, 110, 600) to the server (300, 700), only if the call destination identifier is in a set of pre-selected call destination identifiers.

11. Telecommunications end device (100, 110, 600), comprising
- a first communication interface for establishing a phone call,
- a second communication interface for establishing a data connection to a server (300, 600),
- a user interface,
- a memory, and
- a processor for executing instructions stored in the memory,
wherein the telecommunications end device (100, 110, 600) is adapted to
- detect an event which is related to an outgoing phone call, wherein the telecommunications end device (100, 110, 600) is the calling entity of the outgoing phone call, and wherein the called entity of the outgoing phone call is identified by a call destination identifier,
- in response to detecting an event, transmit a request to the server (300, 700) via a data connection, said request comprising information on the detected event and information on the call destination identifier,
- receive information on at least one action from the server (300, 700) and perform the at least one action in response to the received information.

12. Server (300, 700), comprising
- a communication interface for establishing a data connection with a plurality of telecommunications end devices,
- a memory, and
- a processor for executing instructions stored in the memory,
wherein the server (300, 700) is adapted to
- access a plurality of rules, which are stored in the memory or in a storage device, in particular in a database (400, 800), which is accessible by the server (300, 700), wherein each rule of said plurality of rules is respectively associated with at least one call identifier,
- receive a request from a telecommunications end device (100, 110, 600), wherein the request comprises information on an event detected by the telecommunications end device (100, 110, 600), wherein the event is related to an outgoing phone call, wherein the telecommunications end device (100, 110, 600) is the calling entity of the outgoing phone call, and wherein the called entity of the outgoing phone call is identified by a call destination identifier, and wherein the request comprises information on the call destination identifier, and determine, in response to receiving the request, whether the plurality of rules comprises a rule which matches the received information, and
- if a rule is determined, which matches the received information, determine at least one action to be performed by the telecommunications end device (100, 110, 600) depending on the determined matching rule, and transmit information on the determined at least one action to the telecommunications end device (100, 110, 600).

13. The server of claim 12, adapted to forward a request, which has been received from a telecommunications end device (100, 110, 600), to a further server (301), and in particular adapted to also forward replies received from the further server (301) to the requesting telecommunications end device (100, 110, 600), and/or adapted to receive the request from the telecommunications end device (100, 110, 600) via a server.

14. System (10), comprising
- at least one server (300, 301, 700) according to claim 12 or 13,
- at least one telecommunications end device (100, 110, 600) according to claim 11, and
- at least one communication network (210, 220, 250).

15. Computer program product, comprising instructions which, when executed by a telecommunications end device (100, 110, 600), cause the telecommunications end device (100, 110, 600) to carry out the following steps:
- detect an event which is related to an outgoing phone call, wherein the telecommunications end device (100, 110, 600) is the calling entity of the outgoing phone call, and wherein the called entity of the outgoing phone call is identified by a call destination identifier,
- in response to detecting an event, transmit a request to the server (300, 700) via a data connection, said request comprising information on the detected event and information on the call destination identifier, and
- receive information on at least one action from the server (300, 700) and perform the at least one action in response to the received information.

16. Computer program product, comprising instructions which, when executed by a server (300,600), cause the server (300, 700) to carry out the following steps:
- determine, in response to receiving a request from a telecommunications end device (100, 110, 600), the request comprising information on an event detected by the telecommunications end device (100, 110, 600), wherein the event is related to an outgoing phone call, wherein the telecommunications end device (100, 110, 600) is the calling entity of the outgoing phone call, and wherein the called entity of the outgoing phone call is identified by a call destination identifier, and wherein the request comprises information on the call destination identifier, whether a plurality of rules, which is accessible by the server (300, 700), comprises a rule which matches the received information, wherein each rule of said plurality of rules is respectively associated with at least one call identifier,
and
- if a rule is determined, which matches the received information, determine at least one action to be performed by the telecommunications end device (100, 110, 600) depending on the determined matching rule, and transmit information on the determined at least one action to the telecommunications end device (100, 110, 600).
